# EUROPÄISCHE PATENTSCHRIFT

(11) **EP 2 452 549 B1**
(45) Veröffentlichungstag und Bekanntmachung des Hinweises auf die Patenterteilung: **14.11.2018**
(21) Anmeldenummer: 11181332.5
(22) Anmeldetag: 15.09.2011
(51) Int. Cl.: A01B 69/00, A01D 41/127, G05D 1/02, B62D 1/28

(54) **Verfahren zur Lokalisierung eines landwirtschaftlichen Arbeitsgerätes**
Method for tracking an agricultural work device
Procédé de localisation d'un outil de travail agricole

(30) Priorität: 10.11.2010 DE 102010050790
(43) Veröffentlichungstag der Anmeldung: 16.05.2012
(73) Patentinhaber: CLAAS Selbstfahrende Erntemaschinen GmbH, 33428 Harsewinkel (DE)
(72) Erfinder: Roberg, Hubert, 33428 Harsewinkel (DE); Eggenhaus, Georg, 48369 Saerbeck (DE)

(56) Entgegenhaltungen:
- EP-A2- 1 862 050
- US-A1- 2002 156 556

## Beschreibung

Die vorliegende Erfindung betrifft ein Verfahren zur Lokalisierung eines landwirtschaftlichen Arbeitsgerätes gemäß dem Oberbegriff des Anspruches 1 sowie eine landwirtschaftliche Arbeitsmaschine gemäß dem Oberbegriff des Anspruches 8.

Aus der DE 101 11 529 A1 ist es bekannt, den Koppelvorgang zwischen einem landwirtschaftlichen Arbeitsfahrzeuges und einem Anbaugerät durch eine Koppelvorrichtung zu koordinieren. Zur Koppelung des Arbeitsfahrzeuges und des Anbaugerätes wird das Arbeitsfahrzeug durch eine Bedienperson zunächst in die Nähe des Anbaugerätes verbracht. Im Verlauf der räumlichen Annäherung des Arbeitsfahrzeuges an das Anbaugerät wird durch eine Sensor- und Auswerteeinrichtung, die Teil der Koppelvorrichtung ist, die Lage der Koppelelemente des Anbaugerätes relativ zu den Koppelelementen des Arbeitsfahrzeuges kontinuierlich erfasst. Die Steuereinrichtung berechnet aus der relativen räumlichen Lage zwischen den fahrzeugseitigen und geräteseitigen Koppelelementen eine Bewegungsbahn für den Koppelvorgang, um die fahrzeugseitigen Koppelelemente entlang der berechneten Bewegungsbahn an die geräteseitigen Koppelelemente anzunähern.

Nachteilig an dem aus der DE 101 11 529 A1 bekannten Verfahren ist es, dass zunächst das Arbeitsgerät, welches an einer beliebigen Stelle auf einem zu bearbeitenden Territorium stehen kann, von der Bedienperson lokalisiert werden muss, um den Koppelvorgang unter Verwendung der Koppelvorrichtung durchführen zu können. Die Lokalisierung des Anbaugerätes setzt wiederum die genaue Kenntnis des Ablageortes voraus. Insbesondere bei einer Positionierung des Anbaugerätes am Rand eines zu bearbeitenden Territoriums zu Beginn dessen Bearbeitung kann das Wiederauffinden des Arbeitsgerätes durch die Bedienperson auf Grund eingeschränkter Sichtverhältnisse erschwert werden. Dieses Problem wird zusätzlich durch eine zunehmende Größe der zu bearbeitenden Territorien verschärft. Gerade bei verschmutztem Arbeitsgerät wird die witterungs- oder jahreszeitbedingte Sichtbeschränkung für die Lokalisierung des Arbeitsgerätes zu einem Problem. Erschwert wird das Lokalisieren zudem durch das Arbeiten in unebenem und unübersichtlichem Gelände.

Aus der EP1 862 050 A2 ist ein Verfahren gemäß dem Oberbegriff des Anspruches 1 bekannt, welches die Steuerung des Anspannens einer Landmaschine an einen Schlepper beschreibt. Hierzu kommt eine Steuereinrichtung mit einer Positionsbestimmungseinrichtung in Form eines GPS zum Einsatz. Wird eine jeweilige Landmaschine abgespannt, können die von der Positionsbestimmungseinrichtung bereitgestellten Positionsdaten zusammen mit den Geräteidentifikationsdaten in einem Abstellpositionsspeicher abgespeichert werden, so dass bei einem später erfolgenden erneuten Anspannen die zu dem jeweiligen Gerät gehörigen Positionsdaten leicht abfragbar und/ oder bereitstellbar sind. Dabei ist die Steuereinrichtung dazu ausgebildet, beim Abfragen der entsprechenden Geräteidentifikation die Positionsbestimmungseinrichtung, insbesondere in Form eines GPS, entsprechende Routenanzeigesignale bereitzustellen, die den Maschinenführer zu der Abstellposition leiten.

Aufgabe der vorliegenden Erfindung ist es, den Vorgang der Lokalisierung und des anschließenden Verbindens einer landwirtschaftlichen Arbeitsmaschine und eines Arbeitsgerätes zu vereinfachen.

Die Aufgabe wird durch ein Verfahren gemäß dem kennzeichnenden Teil des Anspruches 1 gelöst.

Vorteilhafte Weiterbildungen des Verfahrens sind Gegenstand der Unteransprüche.

Gemäß Anspruch 1 wird ein Verfahren zur Lokalisierung eines mit einer landwirtschaftlichen Arbeitsmaschine verbindbaren landwirtschaftlichen Arbeitsgerätes, welches von der Arbeitsmaschine in einem Bereich eines zu bearbeitenden Territorium positioniert und getrennt wird, um das landwirtschaftliche Arbeitsgerät zu einem späteren Zeitpunkt wieder zu lokalisieren und mit der Arbeitsmaschine zu verbinden, vorgeschlagen, wobei die Position der Arbeitsmaschine bei der Positionierung respektive Ablage des Arbeitsgerätes durch ein Positionsortungsverfahren bestimmt und als Startpunkt festgelegt und abgespeichert wird. Anschließend wird nach der Positionierung eine Kartierungsfahrt durchgeführt, die eine Wegstrecke vorgebbarer Länge umfasst, während der sich die Arbeitsmaschine von der erfassten Position des Arbeitsgerätes entfernt, wobei die zurückgelegte Wegstrecke als auch der Endpunkt dieser Wegstrecke unter Verwendung des Positionsortungsverfahren aufgezeichnet werden. Für das erneute Verbinden des landwirtschaftlichen Arbeitsgerätes mit der Arbeitsmaschine wird zu einem späteren Zeitpunkt eine Lokalisierungsfahrt durchgeführt wird, bei der der Endpunkt der Wegstrecke der Kartierungsfahrt unter Verwendung des Positionsortungsverfahren automatisch angefahren wird, um ausgehend von diesem Endpunkt den Startpunkt über die während der Kartierungsfahrt aufgezeichnete Wegstrecke anzufahren. Das Verfahren ist dadurch gekennzeichnet, dass eine spezifische Einsatzsituation des Arbeitsgerätes auf dem Feld aufgezeichnet und abrufbar in der Steuerungseinrichtung abgespeichert wird, welche beim Anfahren abgerufen und berücksichtigt wird. Der wesentliche Vorteil dieses Verfahrens besteht darin, dass die Bedienperson die Arbeitsmaschine auf einfache, automatisierte Weise zu der Position des Arbeitsgerätes zurückführen kann, ohne diese Position selbst exakt zu kennen beziehungsweise selbsttätig bestimmen zu können oder Sichtkontakt zu der Position des Arbeitsgerätes haben zu müssen. Durch das erfindungsgemäße Verfahren wird das Wiederauffinden von Arbeitsgeräten, insbesondere bei eingeschränkten Sichtverhältnissen, deutlich vereinfacht. Der Vorgang des Wiederauffindens des Arbeitsgerätes und des Verbindens mit dem Arbeitsgerät lässt sich in kürzerer Zeit effizienter und Materialschonender abschließen.

Vorteilhafterweise kann die Orientierung der Arbeitsmaschine in Bezug auf das positionierte Arbeitsgerät im Startpunkt aufgezeichnet werden. Aus dieser Information lässt sich ableiten, an welcher Stelle der Arbeitsmaschine das Arbeitsgerät mit dieser verbunden ist, so dass die Arbeitsmaschine für den Vorgang des Verbindens mit und des Lösens von dem Arbeitsgerät in der hierfür geeignetsten Position bezogen auf das Arbeitsgerät ausgerichtet ist.

Vorzugsweise sollte die Wegstrecke der Lokalisierungsfahrt in entgegengesetzter Fahrtrichtung wie die Kartierungsfahrt abgefahren wird. Hierdurch lässt sich vermeiden, dass die Arbeitsmaschine zwar die im Zuge der Kartierungsfahrt bestimmte Position ansteuert, aber mit Bezug auf die Ausrichtung zum positionierten Arbeitsgerät eine Korrektur im Sinne von Rangierbewegungen der Arbeitsmaschine erforderlich wird.

Insbesondere kann die Durchführung der Startpunktfestlegung sowie der Kartierungsfahrt beziehungsweise der Lokalisierungsfahrt manuell durch einen Bediener eingeleitet werden. Dies ermöglicht es dem Bediener der Arbeitsmaschine in Abhängigkeit von der durchzuführenden Handlung mit dem Arbeitsgerät, entweder des Positionierens oder des Wiederauffindens, den Vorgang bedarfsgerecht einzuleiten. Die weiteren, zu der späteren Lokalisierung des Arbeitsgerätes erforderlichen Verfahrensschritte werden entsprechend abgearbeitet.

Alternativ kann die Durchführung der Startpunktfestlegung automatisiert beim Lösen des Arbeitsgerätes von der Arbeitsmaschine eingeleitet werden. Dies erlaubt die Festlegung und Hinterlegung verschiedener Startpunkte, wenn während des Einsatzes auf einem zu bearbeitenden Territorium mehrere Arbeitsgeräte zum Einsatz kommen, die an unterschiedlichen Stellen des Territoriums positioniert werden. Bei jedem erneuten Lösen eines Arbeitsgerätes wird dessen Startpunkt automatisch festgelegt, um das jeweilige positionierte respektive abgelegte Arbeitsgerät zu einem späteren Zeitpunkt an der Position der letzten Positionierung wieder lokalisieren zu können. Hieran schließt sich die Durchführung der Kartierungsfahrt in oben beschriebener Weise an.

In bevorzugter Weiterbildung kann dem Bediener im Verlauf der Lokalisierungsfahrt das Erreichen des Startpunktes beziehungsweise des Endpunktes signalisiert werden. Dem Bediener wird dadurch zur Kenntnis gebracht, dass die Arbeitsmaschine in Bezug auf das Arbeitsgerät exakt die Position erreicht hat, in der das Arbeitsgerät von der Arbeitsmaschine zu dessen Positionierung respektive Ablage gelöst wurde, um diese wieder miteinander verbinden zu können.

Des Weiteren kann die Lokalisierungsfahrt das automatische Verbinden mit dem Arbeitsgerät umfassen. Mit dem Erreichen des Startpunktes am Ende der Lokalisierungsfahrt kann der Vorgang des Ankoppelns des Arbeitsgerätes, wie beispielsweise eines Transportwagens oder die Aufnahme eines Vorsatzgerätes, automatisiert eingeleitet und durchgeführt werden. Die Bedienperson der Arbeitsmaschine kann sich stärker auf das Umfeld um die Arbeitsmaschine und das Arbeitsgerät konzentrieren, um etwaigen Gefahren durch Hindernisse oder dergleichen vorzubeugen, da sie hierdurch von dem Vorgang des Verbindens mit dem Arbeitsgerät entlastet wird.

Gemäß dem unabhängigen Anspruch 8 wird eine landwirtschaftliche Arbeitsmaschine vorgeschlagen, die mit einem Arbeitsgerät lösbar verbindbar ist, die eine Steuerungseinrichtung umfasst. Die Steuerungseinrichtung ist dazu eingerichtet, die Position der Arbeitsmaschine bei der Positionierung des Arbeitsgerätes durch ein Positionsortungsverfahren zu bestimmen und die bestimmte Position als einen Startpunkt festzulegen und in einem Speicher der Steuerungseinrichtung abzuspeichern. Weiterhin ist die Steuerungseinrichtung dazu eingerichtet, die Arbeitsmaschine dabei derart zu steuern, dass diese eine Kartierungsfahrt nach der Positionierung des Arbeitsgerätes durchführt, die eine Wegstrecke vorgebbarer Länge umfasst, während der sich die Arbeitsmaschine von der erfassten Position des Arbeitsgerätes entfernt, sowie dass die Steuerungseinrichtung die zurückgelegte Wegstrecke als auch den Endpunkt dieser Wegstrecke unter Verwendung des Positionsortungsverfahren in dem Speicher aufzeichnet. Des Weiteren ist die Steuerungseinrichtung dazu eingerichtet, eine Lokalisierungsfahrt zur Lokalisierung und erneuten Verbindung des landwirtschaftlichen Arbeitsgerätes mit der Arbeitsmaschine durchzuführen, wobei die Steuerungseinrichtung die Arbeitsmaschine derart steuert, dass der Endpunkt der Wegstrecke der Kartierungsfahrt unter Verwendung des Positionsortungsverfahren automatisch angefahren wird, um ausgehend von diesem Endpunkt den Startpunkt über die während der Kartierungsfahrt aufgezeichnete Wegstrecke automatisch anzufahren.

Die Erfindung wird nachstehend anhand von in den Zeichnungen dargestellten Ausführungsbeispielen näher erläutert.

Die zugehörigen Zeichnungen zeigen:
- Fig. 1: eine schematisierte Darstellung einer landwirtschaftlichen Arbeitsmaschine sowie eines auf einem zu bearbeitenden Territorium positionierten Arbeitsgerätes;
- Fig. 2: ein Ablaufdiagramm zur Durchführung des Verfahrens zur Lokalisierung eines landwirtschaftlichen Arbeitsgerätes.

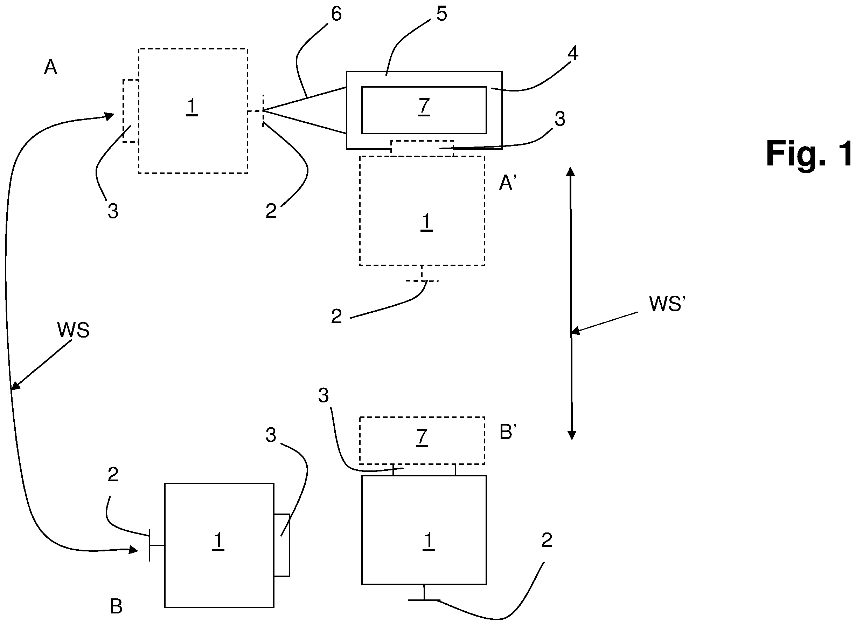

Die schematisierte Darstellung in Fig. 1 zeigt eine landwirtschaftliche Arbeitsmaschine 1, bei der es sich um einen Mähdrescher, einen Feldhäcksler, einen Traktor oder eine sonstige mit einem Arbeitsgerät verbindbare selbstfahrende landwirtschaftliche Arbeitsmaschine handeln kann, sowie ein auf einem zu bearbeitenden Territorium positioniertes Arbeitsgerät 4, wie einen Transportwagen 5 mit einem darauf befindlichen Vorsatzgerät 7 oder ein mit der Arbeitsmaschine 1 verbindbares Anbaugerät, wie ein Pflug, eine Spritze oder dergleichen, welches von der landwirtschaftlichen Arbeitsmaschine 1 von dem Transportwagen 5 aufnehmbar ist beziehungsweise von der landwirtschaftlichen Arbeitsmaschine 1 mitgeführt wird, um zur Bearbeitung des Territoriums eingesetzt zu werden.

Der an der Arbeitsmaschine 1 an einer Anhängerkupplung 2 über eine Deichsel 6 angeordnete Transportwagen 5 wird zu Beginn oder während der Bearbeitung des Territoriums in einem äußeren Bereich desselben, vorzugsweise am Feldrand, an beliebiger Stelle positioniert, um das darauf befindliche Vorsatzgerät 7 über eine an der landwirtschaftlichen Arbeitsmaschine 1 befindliche Aufnahmevorrichtung 3 aufzunehmen. Der Transportwagen 5 verbleibt im Allgemeinen für die Dauer der Bearbeitung des Territoriums an dieser Stelle. Beim Abschluss der Bearbeitung des Territoriums wird diese Position wieder angefahren, um das Vorsatzgerät 7 auf dem Transportwagen 5 abzulegen und den Transportwagen 5 wieder an die landwirtschaftliche Arbeitsmaschine 1 anzukoppeln. Das Lokalisieren des Transportwagens 5 setzt gemäß dem Stand der Technik die genaue Kenntnis der Position bei dessen Abstellen auf dem Territorium voraus sowie den Sichtkontakt zu dieser Position. Das Lokalisieren der Position des Transportwagens 5 wird in der Dunkelheit sowie bei ungünstigen, die Sicht behindernden Witterungslagen, wie Nebel oder Niederschlag, erheblich erschwert, so dass der Vorgang des Wiederauffindens sehr zeitintensiv werden kann.

Gleiches gilt, wenn das Vorsatzgerät 7 auf dem Transportwagen 5 abgelegt und der Transportwagen 5 an die landwirtschaftliche Arbeitsmaschine 1 angekoppelt werden soll. Das Positionieren des Vorsatzgerätes 7 über dem Transportwagen 5 durch eine Bedienperson auf Sicht, zu dessen Ablage auf diesem, ist bei witterungs- und/oder tageszeitbedingt eingeschränkten Sichtverhältnissen trotz an der Arbeitsmaschine 1 vorhandener Beleuchtungsmittel ein zeitaufwändiges und wenig materialschondes Unterfangen.

Hier greift das nachstehend beschriebe Verfahren an. Die Darstellung in Fig. 1 zeigt die Arbeitsmaschine 1 in unterschiedlichen Positionen in Bezug auf das Arbeitsgerät 2. In strichlinierter Weise ist die Arbeitsmaschine 1 in einer mit dem Transportwagen 5 verbundenen Position gezeigt, welche einen festlegbaren Startpunkt A darstellt, der in einem Speichermodul einer Steuereinrichtung abgespeichert wird. Die Arbeitsmaschine 1 legt nach dem Abkoppeln des Transportwagens 5, ausgehend von dem Startpunkt A, eine Wegstrecke WS vorgebbarer Länge zurück, deren Ende einen Endpunkt B markiert. Sowohl der Startpunkt A und der Endpunkt B als auch die dazwischen liegende Wegstrecke WS werden aufgezeichnet und in dem Speichermodul abgespeichert, wobei für die Erfassung des Startpunktes A und des Endpunktes B sowie der dazwischen liegenden Wegpunkte entlang der Wegstrecke WS ein Positionsortungsverfahren angewandt wird, welches beispielsweise auf GPS (Global Positioning System), DGPS (Differential Global Positioning System) oder dergleichen beruht.

Weiterhin zeigt die Darstellung in Fig. 1 in strichlinierter Weise die Arbeitsmaschine 1 in einer Position bezogen auf den Transportwagen 5, welche einer festlegbaren Startposition A' entspricht, die der Aufnahme des Vorsatzgerätes 7 vom Transportwagen 5 durch ein Aufnahmeeinrichtung 3 an der Arbeitsmaschine 1 dient. Ausgehend von dieser Startposition A' wird gleichfalls eine Wegstrecke WS' vorgebbarer Länge zurückgelegt, durch deren Ende ein Endpunkt B' markiert wird. Am Endpunkt B' ist die Arbeitsmaschine 1 vollliniert dargestellt, während das von der Aufnahmeeinrichtung 3 aufgenommene Vorsatzgerät 7 strichliniert dargestellt ist.

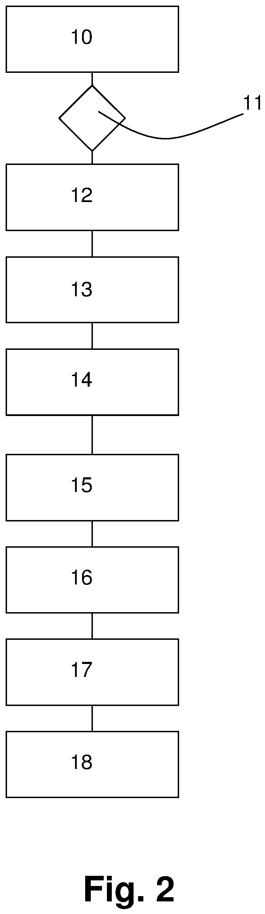

Mit Bezug auf das in Fig. 2 dargestellte Ablaufdiagramm soll das Verfahren zur Lokalisierung näher erläutert werden. Zunächst wird in Schritt 10 das Arbeitsgerät 4, welches anhand des in Fig. 1 beschriebenen Beispieles dem Transportwagen 5 und/oder dem darauf transportierten Vorsatzgerät 7 entspricht, an einer beliebigen Stelle des zu bearbeitenden Territoriums positioniert. Dies kann vorzugsweise zu Beginn, aber auch während der Bearbeitung des Territoriums und dann wiederholt, erfolgen.

Nachdem das Arbeitsgerät 4 an beliebiger Stelle des zu bearbeitenden Territoriums positioniert wurde, kann in einem Auswahlschritt 11 die Durchführung des Verfahrens zur Lokalisierung des Arbeitsgerätes 4 durch einen Bediener manuell ausgelöst werden. Eine manuelle Auslösung kann beispielsweise durch das Betätigen eines Schalters oder der Eingabe eines Befehles über eine Eingabevorrichtung in eine Steuerungseinrichtung der Arbeitsmaschine 1 erfolgen. Alternativ kann die Durchführung des Verfahrens automatisiert ausgelöst werden, beispielsweise durch das Abkoppeln des Transportwagens 5 von der Arbeitsmaschine 1 oder die Aufnahme und das Verbindung des Vorsatzgerätes 7 über die Aufnahmevorrichtung 3 mit der Arbeitsmaschine 1. Beide Ereignisse lassen sich durch das Trennen beziehungsweise das Verbinden, beispielsweise über ein internes Kommunikationssystem der Arbeitsmaschine 1, von der Steuerungseinrichtung erfassen, um daraufhin die Durchführung des Verfahrens zur Lokalisierung auszulösen.

Erfolgt in dem Auswahlschritt 11 die Auslösung zur Durchführung des Verfahrens, wird in einem Schritt 12 zunächst der Startpunkt A, A' unter Verwendung des Positionsortungsverfahrens bestimmt und anschließend von der Steuerungseinrichtung in dem Speichermodul hinterlegt.

Im Anschluss daran wird in einem Verfahrensschritt 13 ausgehend vom jeweiligen Startpunkt A, A' eine Kartierungsfahrt durchgeführt. Die Kartierungsfahrt erfolgt entlang der vorgebbaren Wegstrecke WS, WS' und dient der Erfassung der räumlichen Ausrichtung der Arbeitsmaschine 1 in Bezug auf das Arbeitsgerät 4, wenn sich die Arbeitsmaschine 1 beim Lösen von beziehungsweise nach dem Aufnehmen des Vorsatzgerätes 7 von dem Transportwagen 5 von ihrem Startpunkt A, A' räumlich entfernt.

In einem Verfahrensschritt 14 wird ein Endpunkt B, B', der das Ende der Wegstrecke kennzeichnet, in gleicher Weise erfasst und in dem Speichermodul abgespeichert, wie es im Schritt 12 der Fall ist.

Im Schritt 15 erfolgt die Bearbeitung des Territoriums durch die Arbeitsmaschine 1 respektive den Einsatz des Vorsatzgerätes 7.

Nachdem die Bearbeitung des Territoriums abgeschlossen wurde oder auf Grund eingeschränkter Sichtverhältnisse beendet werden musste, soll das Vorsatzgerät 7 auf dem Transportwagen 5 abgelegt werden. Um das Arbeitsgerät 4 in Form des Transportwagens 5 auf dem Territorium lokalisieren zu können, wird in einem Verfahrensschritt 16 zunächst der abgespeicherte Endpunkt B angefahren, der den Ausgangspunkt für die Lokalisierung des Arbeitsgerätes 4 bildet. Das Anfahren dieses Endpunktes B kann automatisiert durch die Steuerungseinrichtung durchgeführt werden.

Ausgehend von dem Endpunkt B wird in einem Schritt 17 automatisch eine Lokalisierungsfahrt durchgeführt, während der die in Schritt 13 aufgezeichnete Wegstrecke WS in umgekehrter Richtung abgefahren wird. Während dieser Lokalisierungsfahrt wird die Arbeitsmaschine 1 in Bezug auf das positionierte Arbeitsgerät 4 derart ausgerichtet, das mit dem Erreichen des Startpunktes A das Verbinden mit dem Arbeitsgerät 4, wie dem Transportwagen 5, beziehungsweise das Ablegen des Arbeitsgerätes 4, wie dem Vorsatzgerät 7 auf dem Transportwagen 5, ohne zusätzlich durchzuführende Rangierbewegungen der Arbeitsmaschine 1 durchführbar ist. Die Arbeitsmaschine 1 nimmt am Ende der Lokalisierungsfahrt mit dem Erreichen des Startpunktes A, A' automatisch die Position und räumliche Ausrichtung in Bezug auf das Arbeitsgerät 4 ein, welche die Arbeitsmaschine 1 inne hatte, als das Positionieren des Arbeitsgerätes 4 an beliebiger Stelle des Territoriums in dem Schritt 10 durchgeführt wurde.

Für die Durchführung des Verfahrens ist die landwirtschaftliche Arbeitsmaschine 1 mit einer Steuerungseinrichtung ausgeführt, die eine Positionsermittlungseinrichtung, beispielsweise einen GPS-Empfänger aufweist, der von Positionssatelliten GPS-Signale erhält. Vorzugsweise handelt es sich um einen GPS-Empfänger, welcher in einem korrigierten satellitengestützten System, beispielsweise mit DGPS oder Ähnlichem, arbeitet, um eine möglichst exakte Positionsbestimmung, bevorzugt auf wenige Zentimeter genau, durchführen zu können. Zudem weist die Steuerungseinrichtung zumindest einen Prozessor sowie wenigstens ein Speichermodul auf, welche der Verarbeitung und Speicherung der empfangenen und ausgewerteten Positionssignale dienen, die die Startpunkte A, A' und Endpunkte B, B' sowie den Verlauf und die Länge der Wegstrecke WS, WS' wiedergeben.

Die Steuerungseinrichtung weist weiterhin eine Eingabeeinrichtung und eine Anzeigeeinrichtung auf, über die Befehle eingebbar und Arbeitsparameter der Arbeitsmaschine 1 wie auch des Arbeitsgerätes 4 anzeigbar sind. Die Kommunikation zwischen der Arbeitsmaschine 1 und dem Arbeitsgerät 4 erfolgt, wie weiter oben ausgeführt, über ein internes Kommunikationssystem und erlaubt es einem Bediener der Arbeitsmaschine 1 den Vorgang gemäß Schritt 11 oder gemäß Schritt 16 einzuleiten, um die diesen Schritten 11, 16 nachfolgenden Verfahrensschritte manuell auszulösen. Alternativ kann der Schritt 11 auch automatisch eingeleitet werden, wenn über das Kommunikationssystem die Information über das Abkoppeln des jeweiligen Arbeitsgerätes 4 zu dessen Positionierung gemäß dem Schritt 10 übertragen wird.

Das Verfahren ermöglicht es, die Positionierung von der Arbeitsmaschine 1 in Bezug auf den Transportwagen 5 und das darauf befindliche Vorsatzgerät 7 zu erfassen und abrufbar in der Steuerungseinrichtung zu hinterlegen, wobei Einflüsse wie die Seiten- oder Hangneigung von der Arbeitsmaschine 1 und dem Transportwagen 5 bei der Aufnahme des Vorsatzgerätes 7 oder die Positionierung der Aufnahmeeinrichtung 3 berücksichtigt werden. Entsprechend werden diese Informationen für den Vorgang der Ablage des Vorsatzgerätes 7 auf dem Transportwagen 5 abgerufen, wobei die zum Zeitpunkt der Aufnahme von dem Transportwagen 5 bestehenden Bedingungen wieder hergestellt werden, um eine Kollision oder Beschädigung des Transportwagens 5 und /oder des Vorsatzgerätes 7 zu vermeiden. Es wird ausgehend von einer spezifischen Einsatzsituation auf dem Feld, die eine Absenkung des Reifendruckes der Arbeitsmaschine hat erforderlich werden lassen sowie eine gegenüber dem Vorgang der Aufnahme vom Transportwagen 5 veränderte Positionierung der Aufnahmeeinrichtung 3, beispielsweise durch eine Schnittwinkeleinstellung sowie ein Verschwenken des Vorsatzgerätes 7 um die Längsachse der Aufnahmeeinrichtung 3, aufgezeichnet und abrufbar in der Steuerungseinrichtung abgespeichert. Diese Information wird beim Anfahren des Transportwagens 5 zur Ablage des Vorsatzgerätes 7 auf dem Transportwagen 5 abgerufen und berücksichtigt, so dass Kollisionen mit dem Transportwagen 5 auf Grund abweichender Einstellungen des Vorsatzgerätes 7 und der Aufnahmeeinrichtung 3 am Ende eines Erntevorganges gegenüber denen im Zeitpunkt der Aufnahme vermieden werden können.

### Bezugszeichenliste

| | | | |
|---|---|---|---|
| 1 | Arbeitsmaschine | Schritt 10 | Positionieren des Arbeitsgerätes |
| 2 | Anhängerkupplung | Schritt 11 | Auslösen des Verfahrens |
| 3 | Aufnahmeeinrichtung | Schritt 12 | Startpunkt festlegen |
| 4 | Arbeitsgerät | Schritt 13 | Kartierungsfahrt |
| 5 | Transportwagen | Schritt 14 | Endpunkt festlegen |
| 6 | Deichsel | Schritt 15 | Bearbeitung des Territoriums |
| 7 | Vorsatzgerät | Schritt 16 | Anfahren Endpunkt |
| | | Schritt 17 | Lokalisierungsfahrt |
| A, A' | Startpunkt | Schritt 18 | Aufnehmen des Arbeitsgerätes |
| B, B' | Endpunkt | | |
| WS, WS' | Wegstrecke | | |

## Patentansprüche

1. Verfahren zur Lokalisierung eines mit einer landwirtschaftlichen Arbeitsmaschine (1) verbindbaren landwirtschaftlichen Arbeitsgerätes (4, 5, 7), welches von der Arbeitsmaschine (1) in einem Bereich eines zu bearbeitenden Territorium positioniert und getrennt wird, um das landwirtschaftliche Arbeitsgerät (4, 5, 7) zu einem späteren Zeitpunkt wieder zu lokalisieren und mit der Arbeitsmaschine (1) zu verbinden, wobei
- die Position der Arbeitsmaschine (1) bei der Positionierung des Arbeitsgerätes (4, 5, 7) durch ein Positionsortungsverfahren bestimmt und als ein Startpunkt (A, A') festgelegt und abgespeichert wird,
- dass nach der Positionierung eine Kartierungsfahrt durchgeführt wird, die eine Wegstrecke (WS, WS') vorgebbarer Länge umfasst, während der sich die Arbeitsmaschine (1) von der erfassten Position des Arbeitsgerätes (4, 5, 7) entfernt, wobei die zurückgelegte Wegstrecke (WS, WS') als auch der Endpunkt (B, B') dieser Wegstrecke (WS, WS') unter Verwendung des Positionsortungsverfahren aufgezeichnet werden,
- dass zur Lokalisierung und erneuten Verbindung des landwirtschaftlichen Arbeitsgerätes (4, 5, 7) mit der Arbeitsmaschine (1) eine Lokalisierungsfahrt durchgeführt wird, bei der der Endpunkt (B, B') der Wegstrecke (WS, WS') der Kartierungsfahrt unter Verwendung des Positionsortungsverfahren automatisch angefahren wird, um ausgehend von diesem Endpunkt (B, B') den Startpunkt (A, A') über die während der Kartierungsfahrt aufgezeichnete Wegstrecke (WS, WS') automatisch anzufahren
**dadurch gekennzeichnet.**
**dass** eine spezifische Einsatzsituation des Arbeitsgerätes (4, 5, 7) auf dem Feld aufgezeichnet und abrufbar in der Steuerungseinrichtung abgespeichert wird, welche beim Anfahren abgerufen und berücksichtigt wird.

2. Verfahren nach Anspruch 1, **dadurch gekennzeichnet, dass** die Orientierung der Arbeitsmaschine (1) in Bezug auf das positionierte Arbeitsgerät (4, 5, 7) im Startpunkt (A, A') aufgezeichnet wird.

3. Verfahren nach einem der Ansprüche 1 oder 2, **dadurch gekennzeichnet, dass** die Wegstrecke (WS, WS') der Lokalisierungsfahrt in entgegengesetzter Fahrtrichtung wie die Kartierungsfahrt abgefahren wird.

4. Verfahren nach einem der Ansprüche 1 bis 3, **dadurch gekennzeichnet, dass** die Durchführung der Startpunktfestlegung (A, A') sowie der Kartierungsfahrt beziehungsweise der Lokalisierungsfahrt manuell durch einen Bediener eingeleitet werden.

5. Verfahren nach einem der Ansprüche 1 bis 3, **dadurch gekennzeichnet, dass** die Durchführung der Startpunktfestlegung automatisiert beim Lösen des Arbeitsgerätes (4, 5, 7) von der Arbeitsmaschine (1) eingeleitet wird.

6. Verfahren nach einem der Ansprüche 1 bis 5, **dadurch gekennzeichnet, dass** dem Bediener im Verlauf der Lokalisierungsfahrt das Erreichen des Startpunktes (A, A') beziehungsweise des Endpunktes (B, B') signalisiert wird.

7. Verfahren nach einem der Ansprüche 1 bis 6, **dadurch gekennzeichnet, dass** die Lokalisierungsfahrt das automatische Verbinden mit dem Arbeitsgerät (4, 5,7) umfasst.

8. Landwirtschaftliche Arbeitsmaschine (1), die mit einem Arbeitsgerät (4, 5, 7) lösbar verbindbar ist, umfassend eine Steuerungseinrichtung, die dazu eingerichtet ist, die Position der Arbeitsmaschine (1) bei der Positionierung des Arbeitsgerätes (4, 5, 7) durch ein Positionsortungsverfahren zu bestimmen und die bestimmte Position als einen Startpunkt (A, A') festzulegen und abzuspeichern,
- dass die Steuerungseinrichtung die Arbeitsmaschine derart steuert, um eine Kartierungsfahrt nach der Positionierung des Arbeitsgerätes (4, 5, 7) durchzuführen, die eine Wegstrecke (WS, WS') vorgebbarer Länge umfasst, während der sich die Arbeitsmaschine (1) von der erfassten Position des Arbeitsgerätes (4, 5, 7) entfernt, sowie dass die Steuerungseinrichtung die zurückgelegte Wegstrecke (WS, WS') als auch den Endpunkt (B, B') dieser Wegstrecke (WS, WS') unter Verwendung des Positionsortungsverfahren in einem Speicher aufzeichnet,
- dass die Steuerungseinrichtung dazu eingerichtet ist, eine Lokalisierungsfahrt zur Lokalisierung und erneuten Verbindung des landwirtschaftlichen Arbeitsgerätes (4, 5, 7) mit der Arbeitsmaschine (1) durchzuführen, wobei die Steuerungseinrichtung die Arbeitsmaschine (1) derart steuert, dass der Endpunkt (B, B') der Wegstrecke (WS, WS') der Kartierungsfahrt unter Verwendung des Positionsortungsverfahren automatisch angefahren wird, um ausgehend von diesem Endpunkt (B, B') den Startpunkt (A, A') über die während der Kartierungsfahrt aufgezeichnete Wegstrecke (WS, WS') automatisch anzufahren,
**dadurch gekennzeichnet.**
**dass** eine spezifische Einsatzsituation des Arbeitsgerätes (4, 5, 7) auf dem Feld aufgezeichnet und abrufbar in der Steuerungseinrichtung abgespeichert wird, welche beim Anfahren abgerufen und berücksichtigt wird.

## Claims

1. A method of locating an agricultural working apparatus (4, 5, 7) which can be connected to an agricultural working machine (1) and which is positioned by the working machine (1) in a region of a territory to be processed and separated in order to locate the agricultural working apparatus (4, 5, 7) again at a later time and connect it to the working machine (1), wherein the position of the working machine (1) is determined in positioning of the working apparatus (4, 5, 7) by a position locating method and established and stored as a starting point (A, A') after positioning a mapping run is carried out which includes a travel distance (WS, WS') of predeterminable length, during which the working machine (1) moves away from the detected position of the working apparatus (4, 5, 7), wherein the travel distance (WS, WS') covered and also the end point (B, B') of said travel distance (WS, WS') are recorded using the position locating method, a locating run is carried out to locate and re-connect the agricultural working apparatus (4, 5, 7) to the working machine (1), in which the end point (B, B') of the travel distance (WS, WS') of the mapping run is automatically approached using the position locating method in order automatically to approach the starting point (A, A') starting from said end point (B, B') over the travel distance (WS, WS') recorded during the mapping run,
**characterised in that** a specific situation of use of the working apparatus (4, 5, 7) on the field is recorded and retrievably stored in the control device, which is retrieved and taken into account in the approach travel.

2. A method according to claim 1 **characterised in that** the orientation of the working machine (1) is recorded in relation to the positioned working apparatus (4, 5, 7) at the starting point (A, A').

3. A method according to one of claims 1 and 2 **characterised in that** the travel distance (WS, WS') of the locating run is travelled in the opposite direction of travel to the mapping run.

4. A method according to one of claims 1 to 3 **characterised in that** implementation of the operation of establishing the starting point (A, A') as well as the mapping run and the locating run is initiated manually by an operator.

5. A method according to one of claims 1 to 3 **characterised in that** implementation of the operation of establishing the starting point is initiated in automated mode upon release of the working apparatus (4, 5, 7) from the working machine (1).

6. A method according to one of claims 1 to 5 **characterised in that** the attainment of the starting point (A, A') and the end point (B, B') respectively is signalled to the operator in the course the locating run.

7. A method according to one of claims 1 to 6 **characterised in that** the locating run includes automatic connection to the working apparatus (4, 5, 7).

8. An agricultural working machine (1) which can be releasably connected to a working apparatus (4, 5, 7), including a control device which is adapted to determine the position of the working machine (1) in positioning of the working apparatus (4, 5, 7) by a position locating method and to establish and store the given position as a starting point (A, A'), the control device controls the working machine in such a way as to carry out a mapping run after positioning of the working apparatus (4, 5, 7), which includes a travel distance (WS, WS') of predeterminable length, during which the working machine (1) moves away from the detected position of the working apparatus (4, 5, 7), and the control device records the travel distance (WS, WS') covered and also the end point (B, B') of that travel distance (WS, WS') in a memory using the position locating method, and the control device is adapted to carry out a locating run for locating and reconnecting the agricultural working apparatus (4, 5, 7) to the working machine (1), wherein the control device controls the working machine (1) in such a way that the end point (B, B') of the travel distance (WS, WS') of the mapping run is automatically approached using the position locating method in order automatically to approach the starting point (A, A') starting from said end point (B, B') over the travel distance (WS, WS') recorded during the mapping run,
**characterised in that** a specific situation of use of the working apparatus (4, 5, 7) on the field is recorded and retrievably stored in the control device, which is retrieved and taken into account in the approach travel.

## Revendications

1. Procédé de localisation d'un appareil de travail agricole (4, 5, 7) qui peut être relié à une machine de travail agricole (1) et qui est positionné et séparé de la machine de travail (1) dans une zone d'un territoire à travailler, afin de localiser à nouveau l'appareil de travail agricole (4, 5, 7) à un moment ultérieur et de le relier à la machine de travail (1),
- la position de la machine de travail (1) étant déterminée lors du positionnement de l'appareil de travail (4, 5, 7) par l'intermédiaire d'un procédé de repérage de position et étant définie et mémorisée comme point de départ (A, A'),
- après le positionnement étant réalisé un parcours de cartographie qui comprend un trajet (WS, WS') de longueur prescriptible pendant lequel la machine de travail (1) s'éloigne de la position détectée de l'appareil de travail (4, 5, 7), le trajet parcouru (WS, WS') ainsi que le point terminal (B, B') de ce trajet (WS, WS') étant enregistrés à l'aide du procédé de repérage de position,
- pour la localisation et la liaison renouvelée de l'appareil de travail agricole (4, 5, 7) avec la machine de travail (1) étant réalisé un parcours de localisation lors duquel le point terminal (B, B') du trajet (WS, WS') du parcours de cartographie est rallié automatiquement à l'aide du procédé de repérage de position afin de rallier automatiquement, à partir de ce point terminal (B, B'), le point de départ (A, A') par le trajet enregistré lors du parcours de cartographie (WS, WS'),
**caractérisé en ce que** dans l'équipement de commande est enregistré et mémorisé de manière consultable un emplacement spécifique de mise en oeuvre de l'appareil de travail (4, 5, 7) dans le champ, lequel est consulté et pris en compte lors du ralliement.

2. Procédé selon la revendication 1, **caractérisé en ce que** l'orientation de la machine de travail (1) par rapport à l'appareil de travail positionné (4, 5, 7) est enregistrée au point de départ (A, A').

3. Procédé selon une des revendications 1 ou 2, **caractérisé en ce que** le trajet (WS, WS') du parcours de localisation est parcouru dans le sens de marche inverse de celui du parcours de cartographie.

4. Procédé selon une des revendications 1 à 3, **caractérisé en ce que** la réalisation de la définition de point de départ (A, A') ainsi que du parcours de cartographie, respectivement du parcours de localisation est lancée manuellement par l'utilisateur.

5. Procédé selon une des revendications 1 à 3, **caractérisé en ce que** la réalisation de la définition de point de départ est lancée automatiquement lors de la séparation de l'appareil de travail (4, 5, 7) par rapport à la machine de travail (1).

6. Procédé selon une des revendications 1 à 5, **caractérisé en ce que**, au cours du parcours de localisation, l'atteinte du point de départ (A, A'), respectivement du point terminal (B, B') est signalée à l'utilisateur.

7. Procédé selon une des revendications 1 à 6, **caractérisé en ce que** le parcours de localisation comprend la liaison automatique avec l'appareil de travail (4, 5, 7).

8. Machine de travail agricole (1) qui peut être reliée de manière détachable à un appareil de travail (4, 5, 7), comprenant un équipement de commande qui est agencé pour déterminer la position de la machine de travail (1) lors du positionnement de l'appareil de travail (4, 5, 7) par l'intermédiaire d'un procédé de repérage de position et pour définir et mémoriser la position déterminée comme point de départ (A, A'),
- l'équipement de commande commandant la machine de travail de façon à réaliser, après le positionnement de l'appareil de travail (4, 5, 7), un parcours de cartographie qui comprend un trajet (WS, WS') de longueur prescriptible pendant lequel la machine de travail (1) s'éloigne de la position détectée de l'appareil de travail (4, 5, 7), et l'équipement de commande enregistrant dans une mémoire le trajet parcouru (WS, WS') ainsi que le point terminal (B, B') de ce trajet (WS, WS') à l'aide du procédé de repérage de position,
- l'équipement de commande étant agencé pour réaliser un parcours de localisation en vue de la localisation et de la liaison renouvelée de l'appareil de travail agricole (4, 5, 7) avec la machine de travail (1), l'équipement de commande commandant la machine de travail (1) de façon que le point terminal (B, B') du trajet (WS, WS') du parcours de cartographie soit rallié automatiquement à l'aide du procédé de repérage de position afin de rallier automatiquement, à partir de ce point terminal (B, B'), le point de départ (A, A') par le trajet enregistré lors du parcours de cartographie (WS, WS'), **caractérisée en ce que** dans l'équipement de commande est enregistré et mémorisé de manière consultable un emplacement spécifique de mise en oeuvre de l'appareil de travail (4, 5, 7) dans le champ, lequel est consulté et pris en compte lors du ralliement.
